# EUROPÄISCHE PATENTSCHRIFT

(11) **EP 1 269 066 B1**
(45) Veröffentlichungstag und Bekanntmachung des Hinweises auf die Patenterteilung: **02.06.2004**
(21) Anmeldenummer: 01915414.5
(22) Anmeldetag: 23.03.2001
(51) Int. Cl.: F16L 55/165

(54) **VERFAHREN ZUM HERSTELLEN EINES ALS AUSKLEIDUNG IN EINE ROHRLEITUNG ODER EINEN KANAL EINSETZBAREN ROHRSCHUSSES**
METHOD FOR THE PRODUCTION OF A PIPE SECTION FOR INSERTION IN A PIPELINE OR CHANNEL AS A COATING
PROCEDE POUR LA PRODUCTION D'UN ELEMENT DE TUYAU UTILISABLE DANS UNE CONDUITE OU UN CONDUIT COMME UN REVETEMENT

(30) Priorität: 24.03.2000 DE 10014653
(43) Veröffentlichungstag der Anmeldung: 02.01.2003
(73) Patentinhaber: SIMONA AG, 55606 Kirn/Nahe (DE)
(72) Erfinder: ALLMANN, Jürgen, 55606 Kirn (DE); BAUMANN, Edwin, 55606 Kirn (DE); SPENGLER, Richard, 55606 Kirn (DE)
(74) Vertreter: Held, Stephan, Dr.rer.nat., Dipl.-Chem.
(86) Internationale Anmeldenummer: PCT/EP2001/003347
(87) Internationale Veröffentlichungsnummer: WO 2001/071237

(56) Entgegenhaltungen:
- DE-A- 4 023 542
- DE-C- 19 542 114
- FR-A- 2 656 821
- US-A- 5 762 450

## Beschreibung

Die Erfindung betrifft ein Verfahren gemäß Gattungsbegriff des Anspruchs 1.

Aus DE 298 18 296.3 Ul ist bereits ein Rohrschuß in Gestalt eines einstückigen Kunststofformkörpers mit etwa eiförmigem Profil zur nachträglichen Auskleidung schadhafter Rohrleitungen oder Kanäle nach dem sogenannten Relining-Verfahren bekannt, der gespritzt, gegossen (vorzugsweise rotationsgegossen) oder im wesentlichen extrudiert sein kann. In einer Ausführungsform weist dieser Rohrschuß ein über einen im wesentlichen zylindrischen Rohrabschnitt radial nach außen hervortretendes Muffenende sowie auf seiner Außenfläche eine Anzahl ebenso weit radial nach außen hervortretender sogenannter Abstandshalter und Anker auf, die zum einen einen gleichmäßigen Abstand zwischen der Außenwand des im wesentlichen zylindrischen Rohrabschnitts von der Innenwand der umgebenden Rohrleitung bzw. des umgebenden Kanals, zum anderen eine Verankerung in einer den betreffenden Zwischenraum im übrigen ausfüllenden Vergußmasse herstellen sollen, um so vor allem die verhältnismäßig flachen Seitenwände des zylindrischen Rohrabschnitts zu stabilisieren. Während derartige Rohrschüsse in durchaus befriedigender Weise ihren Zweck erfüllen, ist jedoch ihre Herstellung verhältnismäßig- aufwendig. Vor allem erfordert sie entsprechend große und zum Teil auf die jeweilige Rohrform und -größe zugeschnittene Geräte.

Des weiteren ist aus DE-40 23 542 A1 - wovon im Gattungsbegriff des Anspruchs 1 ausgegangen wird - eine aus aneinandergefügten Kunststoffplatten gebildete Auskleidung für Rohre, insbesondere Betonrohre, oder Ortbetonbauteile bekannt, bei der die Kunststoffplatten durch von der Plattenoberfläche abstehende Stege übergreifende Klemmleisten zusammengehalten werden, unter denen dann noch Schweißnähte angebracht werden. Die betreffenden Kunststoffplatten werden vor Ort zunächst eben nebeneinandergelegt und verbunden, worauf das so erhaltene Flächengebilde rundgebogen und durch eine letzte Klemmleiste und Schweißnaht zu einem Rohr geschlossen wird. Die Klemmleisten, verbleiben auf dem Rohr, das anschließend eingegossen wird. Zur Bildung eines Muffenendes wird auf die betreffende Stirnkante des noch ungebogenen Flächengebildes eine entsprechend profilierte Kunststoffleiste aufgebracht, die nach dem Schließen des Rohres abgelängt und sodann auch ihrerseits durch eine Schweißnaht geschlossen wird. Ein solches Herstellungsverfahren einer Rohrauskleidung ist naturgemäß wiederum verhältnismäßig aufwendig. Dazu noch ist es allein für die Herstellung kreisrunder Rohrprofile geeignet, und die Gestalt der Rohraußenwand. wird weitgehend durch die betreffenden Stege und darauf aufgesetzten Klemmleisten bestimmt.

Davon ausgehend liegt der Erfindung die Aufgabe zugrunde, ein Verfahren zur Herstellung eines Rohrschusses gemäß Gattungsbegriff des Anspruchs 1 anzugeben, welches vergleichsweise einfach auch in kleineren Serien wirtschaftlich ausgeführt werden kann und dazu noch eine freizügige Gestaltung der Rohre und Rohrprofile erlaubt.

Diese Aufgabe ist erfindungsgemäß mit den Merkmalen des Anspruchs 1 gelöst. Die Unteransprüche geben darüber hinausgehend vorteilhafte Ausgestaltungsmöglichkeiten an.

Dadurch, daß der im wesentlichen zylindrische - im Regelfall jedoch nicht kreiszylindrische - Rohrabschnitt allein durch Biegeformen sein endgültiges Profil erhält und auf den vorgefertigten Rohrabschnitt ein ebenso vorgefertigter Muffenring aufgeschoben und erst anschließend fixiert wird, können einfache, herkömmliche Materialien und Herstellungschritte und dazu noch entsprechend einfache, vielseitig einsetzbare Werkzeuge Verwendung finden. Ferner können Wandfläche und Profil des Rohrschusses weitgehend beliebig gestaltet werden.

Wenn im Anspruch 1 von einem flächigen Vorprodukt die Rede ist, soll dieser Begriff ein Rohr (im Gegensatz etwa zu einem Vollprofil) mit einschließen.

Nachfolgend werden bevorzugte Ausführungsbeispiele des beanspruchten Verfahrens anhand der begleitenden Zeichnungen genauer beschrieben. Von diesen zeigt
- Fig. 1: eine Seitenansicht, teilweise geschnitten, eines erfindungsgemäß hergestellten Rohrschusses,
- Fig. 2: ein Schema der Herstellung des betreffenden zylindrischen Rohrabschnitts aus gebogenem Flachmaterial,
- Fig. 3: ein Schema der Herstellung des zylindrischen Rohrabschnitts durch Umformen aus einem andersartigen - in der Regel kreisrunden - Rohrprofil,
- Fig. 4: ein Schema einer zumindest zeitweise kontinuierlich arbeitenden Umformanlage zur Gewinnung des zylindrischen Rohrabschnitts und
- Fig. 5: einen Querschnitt durch den in Fig. 1 dargestellten Rohrschuß etwa aus der Ebene der Linie V-V von Fig. 1, wobei in der linken Hälfte eine Variante dargestellt ist.

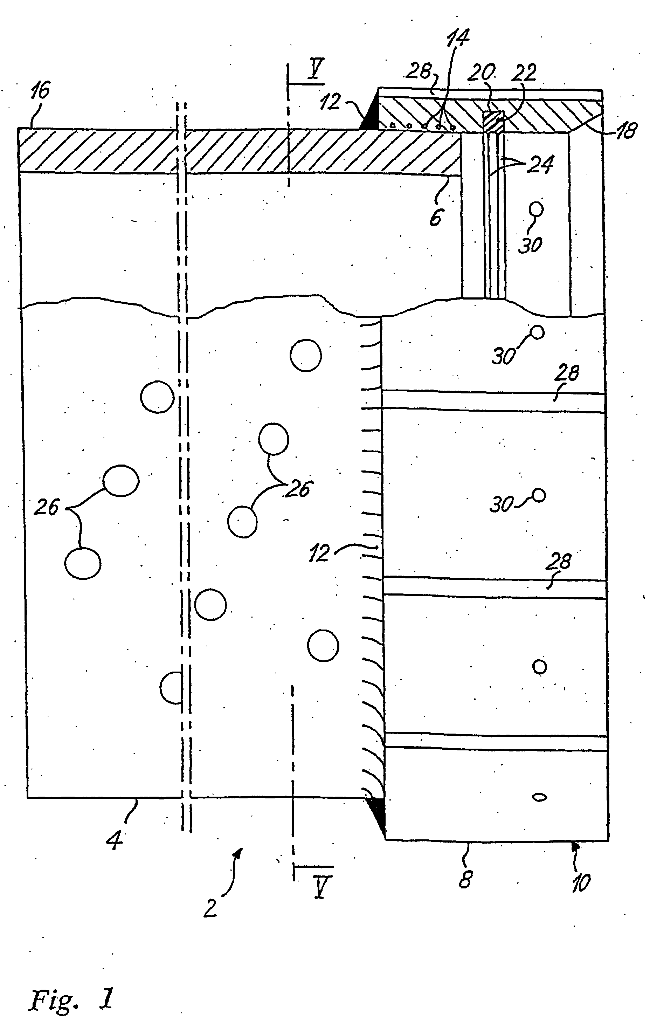

Der in Fig. 1 gesamtheitlich dargestellte Rohrschuß 2 besteht im wesentlichen aus einem zylindrischen Rohrabschnitt 4 und einem ein Ende 6 desselben übergreifenden Muffenring 8 zur Bildung eines Muffenendes 10 des Rohrschusses 2. Beide Teile, 4 und 8, bestehen aus thermoplastischem Kunststoff, vorzugsweise Polyethylen und dabei zweckmäßigerweise solchem mit der Bezeichnung PE 80 oder PE 100 nach DIN 8074/8075 oder Polypropylen und dabei zweckmäßigerweise solchem mit der Bezeichnung PP-H 100, PP-B 80 oder PP-R 80 nach DIN 8077/8078 oder Polyvinylidenfluorid (PVDF), oder aus einem mehrschichtigen Verbund solcher Kunststoffe.

Gemäß Fig. 1 ist der Muffenring 8 auf den zylindrischen Rohrabschnitt 4 teilweise aufgeschoben und darauf mittels einer Kehlnahtschweißung 12 fixiert, doch könnte an die Stelle der Kehlnahtschweißung 12 auch eine Muffenschweißung, insbesondere Elektro-Muffenschweißung treten unter Verwendung einer verlorengegebenen elektrischen Heizwendel, wie sie in Fig. 1 bei 14 angedeutet ist. Derartige Muffenschweißungen sind in der Kunststoffrohrtechnik bekannt und gebräuchlich.

Das Muffenende 10 dient zur Aufnahme des freien Endes 16 des zylindrischen Rohrabschnitts, 4 eines ebensolchen anschließenden Rohrschusses (nicht gezeigt) - in der Rohrtechnik auch als "Spitzende" bezeichnet, obgleich dieses Ende, ebenso wie das von dem Muffenring 8 umschlossene Ende 6 nicht angespitzt oder auch nur angefast sein muß -. Dafür nämlich besitzt der Muffenring 8 an seinem freiliegenden Ende eine innenseitige Anfasung 18, um die Einführung des Endes 16 des anschließenden Rohrschusses zu erleichtern, der-im übrigen jedoch in dem Muffenring 8 satte Aufnahme findet.

Dennoch wird zweckmäßigerweise, wie gezeigt, innenseitig in dem Muffenring 8 eine Ringnut 20 vorgesehen, die eine Lippendichtung 22 aus einem Elastomer mit zwei zueinander parallelen Lippen 24 aufnimmt, die an dem eingesteckten Ende 16 (Spitzende) des anschließenden Rohrschusses abdichtend zur Anlage kommen. Anstatt innenseitig in dem Muffenring 8 könnte die Nut 20 mit der Lippendichtung 22 auch außenseitig an dem freien Ende 16 des zylindrischen Rohrabschnitts 4 vorgesehen werden. Alternativ kann in dem Muffenende 10 oder auf dem Ende 16 auch wieder eine Heizwendel (nicht gezeigt) für eine Elektro-Muffenschweißung der aufeinanderfolgenden Rohrschüsse vorgesehen werden, in welchem Fall dann die Ringnut 20 mit der Lippendichtung 22 entfallen kann.

Wie Fig. 1 ferner zu erkennen gibt, ist die Außenwand des zylindrischen Rohrabschnitts 4 mit einer Reihe von kreisrunden Vorsprüngen 26 besetzt, welche die gleiche Funktion erfüllen, wie die sogenannten Anker 4 nach DE-298 18 296.3-U1, nämlich vor allem die verhältnismäßig flachen Flanken des zylindrischen Rohrabschnitts 4 in einer diesen letztlich umgebenden Vergußmasse zu verankern.

Zum Einbringen solcher Vergußmasse vom Muffenende 10 des verlegten Rohrschusses 2 her sind innerhalb der Außenwand des Muffenringes 8 in Abständen mehrere axialverlaufende Nuten 28 vorgesehen. Sodann weist der Muffenring 8 in dem gezeigten Beispiel auch noch eine Anzahl kranzförmig angeordneter, vertikal zu seiner Wand verlaufender Bohrungen 30 auf zur Aufnahme selbstschneidender Schrauben, um das Muffenende 10 an dem Ende 16 des anschließenden Rohrschusses in bezug auf Zugkräfte ("längskraftschlüssig") zu fixieren. Im Falle einer Muffenschweißung können freilich auch die Bohrungen 30 entfallen.

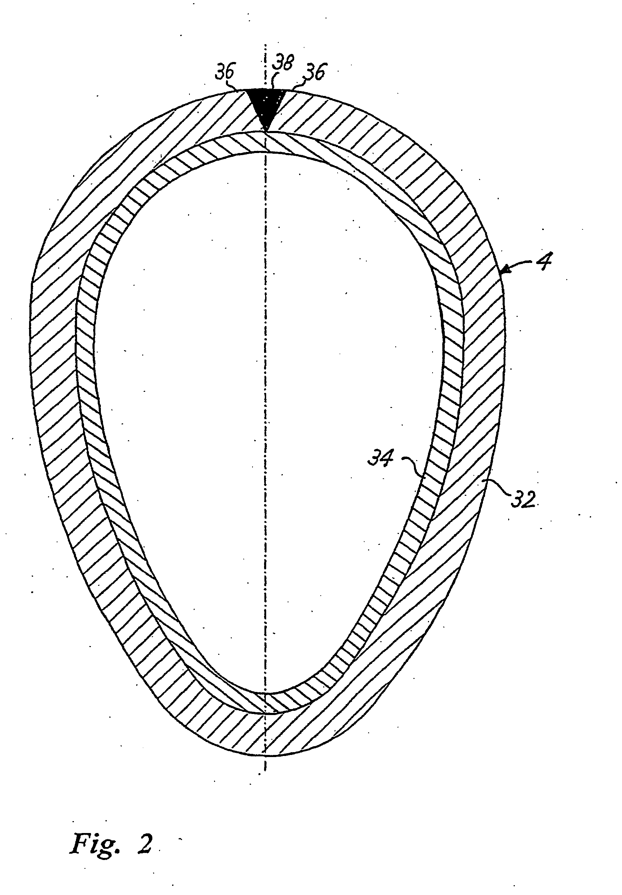

Für die Herstellung des zylindrischen Rohrabschnitts 4 gibt es mehrere Herstellungsverfahren. Zum einen kann er, gemäß Fig. 2, durch Biegen eines ursprünglich flachen Plattenmaterials 32 um einen Kern 34 und anschließendes Nahtschweißen entlang den aneinanderstoßenden Kanten 36 erzeugt werden. In Fig. 2 ist an dieser Stelle eine V-förmige Extrusionsschweißnaht 38 gezeigt. An ihre Stelle könnte freilich auch eine Stumpfschweißnaht treten (nicht gezeigt), wie sie in bekannter Weise nach zwischenzeitlicher Einführung eines sog. Heizspiegels durch Zusammenstoßen der damit vorgeheizten Kanten herstellbar ist.

Statt aus plattenförmigem Flachmaterial könnte der zylindrische Rohrabschnitt 4 in an sich bekannter Weise' auch als Wendelrohr aus einem um den Kern 34 wendelförmig herumgewundenem bandförmigem Flachmaterial, das dementsprechend an seinen Längsrändern verschweißt oder verschmolzen wird, und anschließendes Ablängen hergestellt werden (nicht gezeigt).

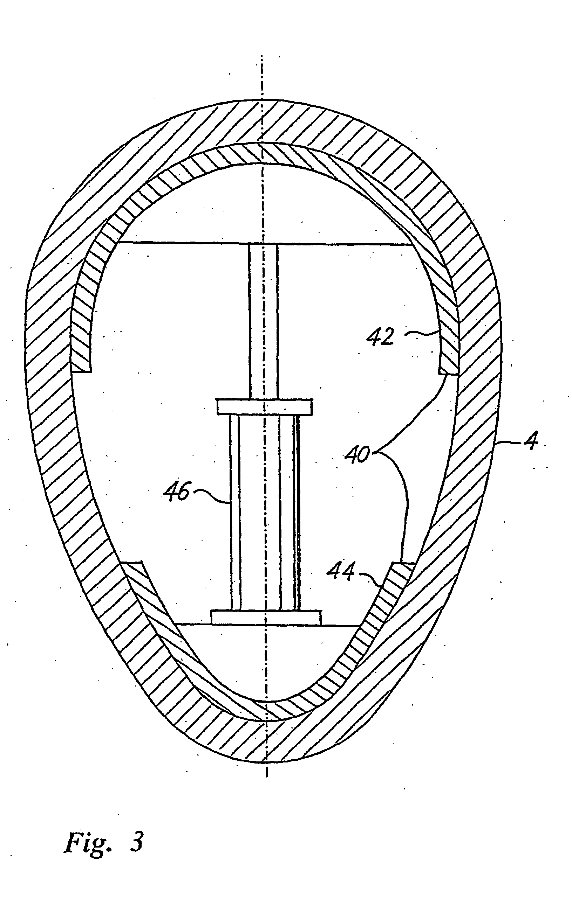

Gemäß Fig. 3 wird der zylindrische Rohrabschnitt 4 mit nichtkreisförmigem, wie z.B. dem gezeigten eiförmigen Profil durch Umformen aus gängigem, zunächst kreiszylindrischem Rohrmaterial und ggf. anschließendes Ablängen hergestellt. Zu diesem Zweck findet ein axial geteilter Kern 40 Anwendung, dessen beide Teile 42 und 44 den beiden Scheiteln des gewünschten Profils entsprechend gekrümmt sind. Die beiden Teile 42 und 44 sind mittels mindestens eines pneumatischen oder hydraulischen Zylinders 46 auseinanderspreizbar, um so die seitlich abgeflachte Profilform zu gewinnen. Anstelle des Zylinders 46 könnte auch ein keilförmiger Schlitten, ein aufblähbarer Schlauch oder dergl. treten. Ebenso könnte ein solcher Schlauch den Kern 40 ersetzen, sofern die gewünschte Kontur des Rohrabschnitts 4 durch eine entsprechende Schalung von außen her vorgegeben wird. Schließlich könnten auch von außen her einwirkende Backen anstelle der beiden innenseitigen Kernteile 42 und 44 auf die letztlich flachen Flanken des Profils einwirken, um die gewünschte Eiform oder dergl. zu erhalten.

- Alle diese Formungs- bzw. Umformungsvorgänge erfolgen zweckmäßigerweise in heißem Zustand. Anderenfalls oder zusätzlich kann ein anschließendes Erhitzen zum Abbau entstandener Spannungen wünschenswert sein.

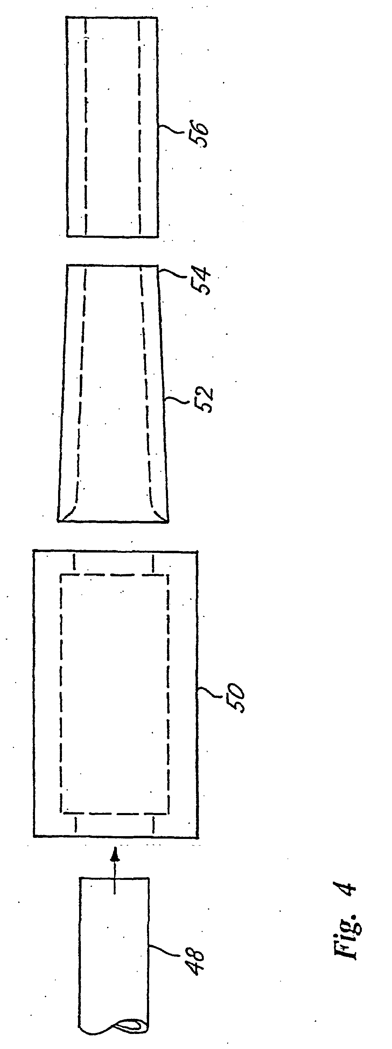

Fig. 4 veranschaulicht schließlich noch ein zumindest zeitweise kontinuierlich ablaufendes Umformungsverfahren zur Gewinnung eines nichtkreisförmigen Rohrprofils aus einem kreisrunden für die Herstellung des zylindrischen Rohrabschnitts 4 aus Fig. 1. Hiernach wird ein gängiges kreiszylindrisches Rohrprofil 48 zunächst durch einen Tunnelofen 50 und sodann durch einen Formkanal 52 axial hindurchgeführt, der zu seinem Austrittsende 54 hin zunehmend die gewünschte. Profilform annimmt.

Dabei kann es zweckmäßig sein, wie gezeigt, auf den Formkanal 52 einen zylindrischen Kühlkanal 56 folgen zu lassen, in dem das geformte Rohrprofil unter Beibehaltung der ihm vermittelten Profilform erstarren kann.

Auf diese Weise können praktisch beliebig lange Profilabschnitte hergestellt werden, die dann anschließend auf irgend eine übliche Weise in die gewünschten Rohrabschnitte 4 abgelängt werden können.

Auf gleiche Weise wie die so geformten zylindrischen Rohrabschnitte 4 können im übrigen auch die zugehörigen Muffenringe 8 geformt werden, vor allem dann, wenn der herzustellende Rohrschuß 2 kein kreisrundes Profil aufweist.

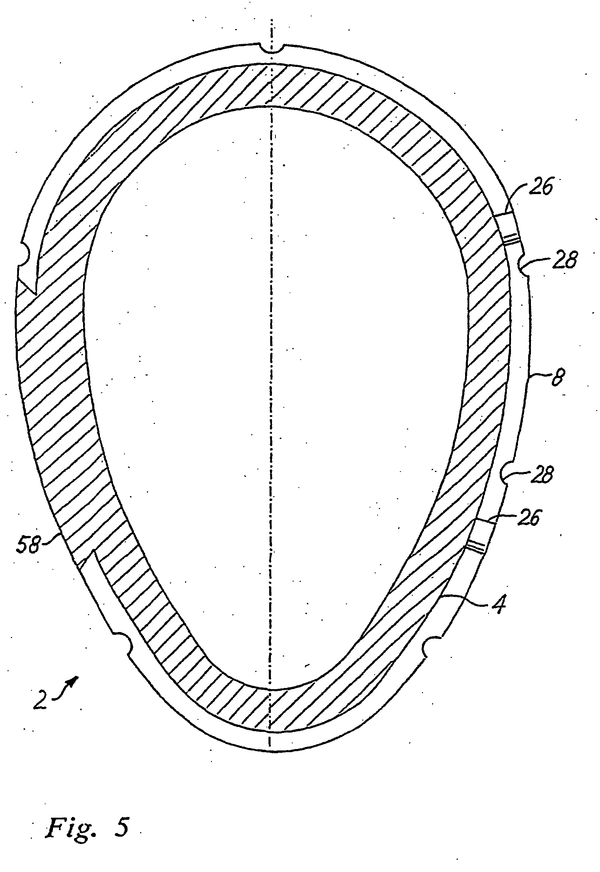

Fig. 5 läßt neben den bereits in Fig. 1 zu erkennenden kreisrunden Vorsprüngen 26 an der Außenwand des zylindrischen Rohrabschnitts 4 - als Alternative oder zusätzlich zu den zylindrischen Vorsprüngen 26 - auch einen verhältnismäßig großflächigen, an seinem Rand Hinterschneidungen aufweisenden Vorsprung 58 erkennen. All diese Vorsprünge dienen der Stabilisierung vor allem der verhältnismäßig flachen Flanken des zylindrischen Rohrabschnitts 4 wie auch dessen Abstandshaltung von der Innenwand des umgebenden schadhaften Rohres oder Kanals. Wie ersichtlich, weisen sie dazu die gleiche Höhe auf wie der Muffenring 8 in bezug auf die Außenwand des Rohrabschnitts 4.

Die Vorsprünge 58 wie 26 werden zweckmäßigerweise auf den ansonsten fertiggestellten zylindrischen Rohrabschnitt 4 nachträglich aufgebracht, was durch Reibschweißen, im Falle der runden Vorsprünge 26 vorzugsweise Rotationsreibschweißen, erfolgen kann. Bei der Herstellung des zylindrischen Rohrabschnitts 4 aus plattenförmigem Flachmaterial kann dieses freilich auch bereits vorausgehend mit den Vorsprüngen, insbesondere 26, versehen sein oder werden.

Der mit dem erfindungsgemäßen Herstellungsverfahren in allen vorausgehend angegebenen Varianten gewonnene Rohrschuß 2 ist in seinen Eigenschaften demjenigen nach DE-298 18 296.3 Ul vergleichbar, dabei jedoch in vielen Fällen einfacher und auch noch in größerer Vielfalt wirtschaftlich herstellbar. So kann er, abgesehen von beliebigen Längen und Stärken, ohne weiteres ganz beliebige Profilformen, wie beispielsweise auch diejenige eines Maulprofils, erhalten.

## Patentansprüche

1. Verfahren zum Herstellen eines als Auskleidung in eine Rohrleitung oder einen Kanal einsetzbaren Rohrschusses (2), der einen im wesentlichen zylindrischen Rohrabschnitt (4) mit einem Muffenende (10) und einem in das Muffenende eines entsprechenden anschließenden Rohrschusses einführbaren Ende (16) aufweist, wobei der Rohrabschnitt (4) unter Biegeformen aus einem im wesentlichen flächigen Vorprodukt (32; 48) entsprechender Wandstärke gewonnen wird, **dadurch *gekennzeichnet,* daß** der Rohrabschnitt (4) allein durch das Biegeformen sein endgültiges Profil erhält und das Muffenende (10) durch teilweises Aufschieben eines zu dem Rohrabschnitt passenden, separat hergestellten Muffenringes (8) auf ein Ende (6) des Rohrabschnitts und anschließendes Fixieren auf dem letzteren durch Kehlnaht- oder Muffenschweißung hergestellt wird.

2. Verfahren nach Anspruch 1; **dadurch *gekennzeichnet*, daß** der Rohrabschnitt (4) aus um einen Kern (34) herumgewundenem flachem Material (32) mittels Nahtschweißung, Strumpfschweissung oder dergleichen gebildet wird.

3. Verfahren nach Anspruch 2, **dadurch *gekennzeichnet,* daß** der Rohrabschnitt (4) aus in einer achsnormalen Ebene gebogenem Plattenmaterial (32) hergestellt wird.

4. Verfahren nach Anspruch 2, **dadurch *gekennzeichnet,* daß** der Rohrabschnitt (4) aus um einen Kern (34) gewendeltem bandförmigem Material hergestellt wird.

5. Verfahren nach Anspruch 1, **dadurch gekennzeichnet, daß** der Rohrabschnitt (4) bei nichtkreisförmigem Rohrprofil durch Umformen aus einem kreiszylindrischen Rohrabschnitt gewonnen wird.

6. Verfahren nach Anspruch 5, **dadurch *gekennzeichnet,*** däß das Umformen mittels eines aufspreizbaren Kerns (40) oder eines aufblähbaren Schlauches erfolgt.

7. Verfahren nach Anspruch 5 oder 6, **dadurch *gekennzeichnet*, daß** das Umformen mittels seitlich angelegter Backen erfolgt.

8. Verfahren nach Anspruch 5, **dadurch *gekennzeichnet,* daß** das Umformen stetig im Zuge einer Längsbewegung eines zunächst kreiszylindrischen Rohrprofils und, gewünschtenfalls, nachträgliches Ablängen erfolgt.

9. Verfahren nach einem der vorhergehenden Ansprüche, **dadurch *gekennzeichnet,* daß** in das Muffenende (10) innenseitig oder in das freie Ende (16) des Rohrabschnitts (4) außenseitig eine ringsherumlaufende Nut (20) eingebracht wird, in die eine ringförmige Lippendichtung (22) aus elastomerem Material eingelegt wird.

10. Verfahren nach einem der vorhergehenden Ansprüche, **dadurch *gekennzeichnet,* daß** in die Innenwand des Muffenendes (10) oder die Außenwand des freien Endes (16) des zylindrischen Rohrabschnitts (4) eine Heizwendel für eine Elektro-Muffenschweißung eingebracht wird.

11. Verfahren nach einem der vorhergehenden Ansprüche, **dadurch *gekennzeichnet,* daß** der Rohrabschnitt (4) außenseitig mit Vorsprüngen (26, 58), vorzugsweise mit einer Höhe entsprechend der Wandstärke des Muffenringes (8), versehen wird.

12. Verfahren nach Anspruch 11, **dadurch *gekennzeichnet,* daß** solche Vorsprünge (26) im wesentlichen kreiszylindrische Gestalt aufweisen.

13. Verfahren nach Anspruch 11 oder 12, **dadurch *gekennzeichnet,* daß** solche Vorsprünge (58) Hinterschneidungen aufweisen.

14. Verfahren nach einem der vorhergehenden Ansprüche, **dadurch *gekennzeichnet,* daß** der betreffende Rohrschuß (2) mit Ausnahme einer eventuellen Lippendichtung (22), Heizwendel (14) oder dergl. gesamtheitlich aus thermoplastischem Kunststoff, vorzugsweise Polyethylen, insbesondere solchem mit der Bezeichnung PE 80 oder PE 100 nach DIN 8075/8075, oder Polypropylen, insbesondere solchem mit der Bezeichnung PP-H 100, PP-B 80 oder PP-R 80 nach DIN 8077/8078, oder Polyvinylidenfluorid (PVDF), oder aus einem Mehrschichtverbund solcher Kunststoffe hergestellt wird.

15. Verfahren nach einem der Ansprüche 11 bis 13 in Verbindung mit Anspruch 14, **dadurch *gekennzeichnet,* daß** die Vorsprünge (26, 58) durch Reibschweißen aufgebracht werden.

16. Verfahren nach einem der vorhergehenden Ansprüche, **dadurch *gekennzeichnet,* daß** in den Muffenring (8) vor oder nach dem Aufbringen auf den Rohrabschnitt (4) außenseitig mindestens eine längsverlaufende Nut (28) eingebracht wird.

17. Verfahren nach einem der vorhergehenden Ansprüche, **dadurch *gekennzeichnet,* daß** in den Muffenring (8) zur Wand normale Bohrungen (30) zur Aufnahme von Schrauben eingebracht werden, um das betreffende Muffenende (10) an dem darin einzuführenden Ende (16) eines anschließenden Rohrschusses (2) zu fixieren.

## Claims

1. Method for producing a pipe section (2) which can be inserted as a lining into a pipeline or a channel and has a substantially cylindrical pipe segment (4) with a socket end (10) and an end (16) which can be introduced into the socket end of a corresponding adjoining pipe section, the pipe segment (4) being obtained by bending-shaping from a substantially sheet-like preliminary product (32; 48) of corresponding wall thickness, **characterized in that** the pipe segment (4) is given its final profile by the bending-shaping alone and the socket end (10) is produced by a socket ring (8) that is separately produced and matches the pipe segment being partially pushed onto an end (6) of the pipe segment and subsequently fixed on the latter by fillet or socket welding.

2. Method according to Claim 1, **characterized in that** the pipe segment (4) is formed from flat material (32) wrapped around a core (34), by means of seam welding, butt welding or the like.

3. Method according to Claim 2, **characterized in that** the pipe segment (4) is produced from plate material (32) bent in a plane normal to the axis.

4. Method according to Claim 2, **characterized in that** the pipe segment (4) is produced from strip-shaped material wrapped around a core (34).

5. Method according to Claim 1, **characterized in that** the pipe segment (4) is obtained in the case of a non-circular pipe profile by re-shaping from a circular-cylindrical pipe segment.

6. Method according to Claim 5, **characterized in that** the re-shaping is performed by means of an expandable core (40) or an inflatable tube.

7. Method according to Claim 5 or 6, **characterized in that** the re-shaping is performed by means of laterally applied jaws.

8. Method according to Claim 5, **characterized in that** the re-shaping is performed continuously in the course of a longitudinal movement of an initially circular-cylindrical pipe profile and, if desired, subsequent cutting to length.

9. Method according to one of the preceding claims, **characterized in that** an annularly peripheral groove (20) is introduced into the inside of the socket end (10) or the outside of the free end (16) of the pipe segment (4) and an annular lip seal (22) of elastomeric material is placed into said groove.

10. Method according to one of the preceding claims, **characterized in that** a heating coil for electrical socket welding is introduced into the inside wall of the socket end (10) or the outside wall of the free end (16) of the cylindrical pipe segment (4).

11. Method according to one of the preceding claims, **characterized in that** the pipe segment (4) is provided on the outside with projections (26, 58), preferably with a height corresponding to the wall thickness of the socket ring (8).

12. Method according to Claim 11, **characterized in that** such projections (26) have a substantially circular-cylindrical shape.

13. Method according to Claim 11 or 12, **characterized in that** such projections (58) have undercuts.

14. Method according to one of the preceding claims, **characterized in that** the pipe section (2) concerned is produced in its entirety, with the exception of a possible lip seal (22), heating coil (14) or the like, from thermoplastic material, preferably polyethylene, in particular such polyethylene with the designation PE 80 or PE 100 according to DIN 8074/8075, or polypropylene, in particular such polypropylene with the designation. PP-H 100, PP-B 80 or PP-R 80 according to DIN 8077/8078, or polyvinylidene fluoride (PVDF), or from a multilayer composite of such materials.

15. Method according to one of Claims 11 to 13 in conjunction with Claim 14, **characterized in that** the projections (26, 58) are applied by friction welding.

16. Method according to one of the preceding claims, **characterized in that** at least one longitudinally running groove (28) is introduced into the outside of the socket ring (8) before or after it is applied to the pipe segment (4).

17. Method according to one of the preceding claims, **characterized in that** bores (30) that are normal to the wall, for receiving screws, are introduced into the socket ring (8), in order to fix the socket end (10) concerned on the end (16) to be introduced therein of an adjoining pipe section (2).

## Revendications

1. Procédé pour fabriquer un élément de tuyau (2) pouvant être inséré comme revêtement dans une conduite ou un conduit, qui présente une section de tube (4) sensiblement cylindrique avec une extrémité de manchon (10) et une extrémité (16) pouvant être introduite dans l'extrémité de manchon d'un élément de tuyau consécutif approprié, la section de tube (4) étant obtenue par formage par pliage à partir d'une ébauche (32 ; 48) sensiblement à deux dimensions avec épaisseur de paroi correspondante, **caractérisé en ce que** la section de tube (4) reçoit son profil définitif uniquement par le formage par cintrage et l'extrémité de manchon (10) est fabriquée par une introduction partielle d'une bague de manchon (8) adaptée à la section de tube et fabriquée séparément sur une extrémité (6) de la section de tube et une fixation consécutive sur cette dernière par soudage d'angle ou soudage de manchon.

2. Procédé selon la revendication 1, **caractérisé en ce que** la section de tube (4) est formée à partir de matériau (32) plat enroulé autour d'un noyau par soudage en continu, soudage bord à bord ou similaire.

3. Procédé selon la revendication 2, **caractérisé en ce que** la section de tube (4) est fabriquée à partir d'un matériau en plaque (32) plié dans un plan perpendiculaire à l'axe.

4. Procédé selon la revendication 2, **caractérisé en ce que** la section de tube (4) est fabriquée à partir de matériau en forme de bande enroulé autour d'un noyau (34).

5. Procédé selon la revendication 1, **caractérisé en ce que** la section de tube (4) est obtenue avec un profil de tube non circulaire par formage à partir d'une section de tube cylindrique non circulaire.

6. Procédé selon la revendication 5, **caractérisé en ce que** le formage s'effectue au moyen d'un noyau pouvant être écarté (40) ou d'un flexible pouvant être gonflé.

7. Procédé selon la revendication 5 ou 6, **caractérisé en ce que** le formage s'effectue au moyen de joues placées sur le côté.

8. Procédé selon la revendication 5, **caractérisé en ce que** le formage s'effectue toujours dans le cadre d'un déplacement longitudinal d'un profil tubulaire d'abord de forme cylindrique circulaire, et, si on le souhaite, suivi d'un coupage à la longueur souhaitée.

9. Procédé selon l'une des revendications précédentes, **caractérisé en ce que**, dans l'extrémité de manchon (10) côté intérieur ou dans l'extrémité libre (16) de la section de tube (4) côté extérieur, est introduite une rainure (20) faisant le tour, dans laquelle est inséré un joint à lèvres (22) annulaire en matériau élastomère.

10. Procédé selon l'une des revendications précédentes, **caractérisé en ce que**, dans la paroi intérieure de l'extrémité de manchon (10) ou dans la paroi extérieure de l'extrémité libre (16) de la section de tube (4) cylindrique, est introduit un filament chauffant pour un soudage électrique à manchon.

11. Procédé selon l'une des revendications précédentes, **caractérisé en ce que** la section de tube (4) est pourvue côté extérieur de saillies (26, 58), de préférence avec une hauteur correspondant à l'épaisseur de paroi de la bague de manchon (8).

12. Procédé selon la revendication 11, **caractérisé en ce que** de telles saillies (26) présentent une forme sensiblement cylindrique circulaire.

13. Procédé selon la revendication 11 ou 12, **caractérisé en ce que** de telles saillies (58) présentent des contre-dépouilles.

14. Procédé selon l'une des revendications précédentes, **caractérisé en ce que** l'élément de tuyau (2) concerné est fabriqué, à l'exception d'un éventuel joint à lèvres (22), du filament chauffant (14) ou similaire, dans sa totalité en matière thermoplastique, de préférence du polyéthylène, en particulier celui portant la désignation PE 80 ou PE 100 selon la norme DIN 8075/8075, ou en polypropylène, en particulier celui portant la désignation PP-H 100, PP-B 80 ou PP-R 80 selon DIN 8077/8078, ou dans du fluorure de polyvinylidène (PVDF), ou dans un composite multicouche de tels plastiques.

15. Procédé selon l'une des revendications 11 à 13 en liaison avec la revendication 14, **caractérisé en ce que** les saillies (26, 58) sont appliquées par soudage par friction.

16. Procédé selon l'une des revendications précédentes, **caractérisé en ce qu'**au moins une rainure (28) longitudinale est appliquée dans la bague de manchon (8) avant ou après l'application sur la section de tube (4) côté extérieur.

17. Procédé selon l'une des revendications précédentes, **caractérisé en ce que** des alésages (30) perpendiculaires à la paroi sont introduits dans la bague de manchon (8) pour le logement de vis, afin de fixer l'extrémité de manchon (10) concernée sur l'extrémité (16) à y introduire d'un élément de tuyau (2) consécutif.
